# FASCICULE DE BREVET EUROPEEN

(11) **EP 3 030 923 B1**
(45) Date de publication et mention de la délivrance du brevet: **24.06.2020**
(21) Numéro de dépôt: 14747934.9
(22) Date de dépôt: 05.08.2014
(51) Int. Cl.: G01V 3/15

(54) **SYSTÈME POUR LA CONFIGURATION D'UN DÉTECTEUR PORTATIF**
SYSTEM ZUR KONFIGURATION EINES TRAGBAREN DETEKTORS
SYSTEM FOR CONFIGURING A PORTABLE DETECTOR

(30) Priorité: 05.08.2013 FR 1357786
(43) Date de publication de la demande: 15.06.2016
(73) Titulaire: Costruzioni Elettroniche Industriali Automatismi S.p.A. C.E.I.A. S.P.A., 52041 Civitella in Val di Chiana Arezzo (IT)
(72) Inventeur: MANNESCHI, Alessandro, 52100 Arezzo (IT)
(74) Mandataire: Regimbeau
(86) Numéro de dépôt international: PCT/EP2014/066861
(87) Numéro de publication internationale: WO 2015/018847

(56) Documents cités:
- US-A1- 2009 015 372
- US-A1- 2009 259 321
- US-A1- 2011 109 437
- US-A1- 2013 113 648

## Description

La présente invention concerne le domaine technique général des détecteurs portatifs, notamment pour la détection de métaux.

### PRESENTATION DE L'ART ANTERIEUR

On connaît des dispositifs portatifs pour la détection de métaux.

De tels dispositifs comprennent généralement :
- un manche pour la préhension du dispositif par un opérateur, le manche incluant une source d'alimentation électrique autonome telle qu'une pile ou une batterie, et
- une tête incluant :
   - des moyens de mesure incluant un transducteur inductif, tels qu'une bobine monospire, pour la mesure d'une inductance générée, et
   - des moyens de traitement incluant un microprocesseur, tels qu'une carte électronique, pour détecter la présence de parties métalliques et envoyer une commande d'alarme à des moyens d'alerte.

Un tel détecteur portable peut également comprendre des moyens de saisie, tels qu'un clavier incluant des touches, permettant de programmer différentes fonctions du détecteur. Notamment, les moyens de saisie peuvent comprendre :
- trois touches relatives à la sensibilité de détection du détecteur, chaque touche permettant l'activation d'un niveau de sensibilité différent pour le détecteur, tel que des niveaux de sensibilité faible, moyen et fort,
- une touche d'activation d'une alarme visuelle,
- une touche d'activation d'une alarme vibratoire,
- une touche d'activation d'une alarme sonore.

Les moyens de saisie permettent au détecteur décrit ci-dessus d'être polyvalent. En effet, les touches permettent une configuration optimale du détecteur en fonction de l'application visée. Il est donc possible d'utiliser un même détecteur pour un grand nombre d'applications. Ceci permet une production en grande série du détecteur, celui-ci étant adapté pour un très grand nombre d'applications.

Toutefois, il peut être préférable de simplifier le détecteur en supprimant des touches pour faciliter l'utilisation du détecteur.

Par ailleurs, pour des applications dans lesquels certains paramètres du détecteur doivent répondre à un cahier des charges donné - par exemple niveau de sensibilité maximum du détecteur - il peut être utile de supprimer certaines touches pour limiter les risques de reconfiguration non intentionnelle du détecteur par l'opérateur.

Il y a donc un besoin pour un nouveau détecteur portatif d'utilisation simplifiée, notamment par la suppression de touches du détecteur permettant d'allumer, d'éteindre ou de paramétrer certaines fonctionnalités du détecteur.

### PRESENTATION DE L'INVENTION

A cet effet, l'invention propose un système tel que défini en revendication 1 annexée.

Ainsi, le fait de permettre l'activation/la désactivation de touches du détecteur permet de simplifier le mode de fonctionnement d'un détecteur portatif incluant une pluralité de touches lui permettant de répondre à un grand nombre d'applications.

Par ailleurs, le fait de réaliser cette activation/désactivation de touche(s) de manière numérique en utilisant :
- une unité de programmation,
- une liaison de communication, et
- un contrôleur implanté dans le détecteur,
permet de faciliter le procédé de fabrication du détecteur, puisqu'il n'est pas nécessaire de modifier la conception matérielle du détecteur pour répondre aux exigences d'un client.

Enfin, le fait que l'activation/ la désactivation de touches du détecteur soit effectuée à partir d'une unité de programmation distante permet d'éviter les risques de désactivation/activation intempestifs de touches à partir du détecteur portatif.

On entend, dans le cadre de la présente invention, par « fonctionnalité » du détecteur, des fonctions du détecteur telles que :
- la mise sous tension ou hors tension du détecteur,
- le réglage de la sensibilité du détecteur,
- l'allumage ou l'extinction d'un vibreur, d'un baffle ou d'une diode pour l'émission d'un signal vibratoire, sonore ou lumineux.

Des aspects préférés mais non limitatifs du système selon l'invention sont les suivants :
- les positions relatives des boutons virtuels les uns par rapport aux autres sont identiques aux positions relatives des touches les unes par rapport aux autres ;
- la forme de chaque bouton virtuel de l'interface homme/machine est identique à la forme de la touche du détecteur qui lui est associée ;
- l'interface homme/machine comprend au moins une icône graphique d'activation/de désactivation d'au moins une touche, l'actionnement de l'icône graphique permettant la génération de données de configuration pour l'activation/la désactivation de ladite touche sélectionnée ;
- l'interface homme/machine comprend au moins une fenêtre de paramétrage d'au moins une touche sélectionnée en actionnant son bouton virtuel associé, la fenêtre de paramétrage permettant la génération de données de configuration pour le paramétrage de la fonctionnalité commandée par ladite touche sélectionnée ;
- l'interface homme/machine comprend en outre au moins un bouton virtuel permettant le stockage, dans une mémoire de l'unité de programmation, de données de configurations générées pour un détecteur, et leur réutilisation ultérieure pour la configuration d'un autre détecteur ;
- la liaison de communication comprend un câble coaxial et des connecteurs tels que des connecteurs de type Bus universel en série, les connecteurs permettant la connexion de la liaison de communication à l'unité de programmation d'une part et au détecteur d'autre part ;
- le détecteur comprend un manche incluant :
   ∘ un logement ouvert à son extrémité, le logement étant adapté pour recevoir une batterie du détecteur, et
   ∘ un couvercle pour coiffer l'extrémité ouverte du logement,
   le logement incluant en outre une prise de raccordement telle qu'une prise de raccordement de type Bus universel en série, pour permettre la connexion du détecteur à la liaison de communication.

L'invention concerne également un détecteur portatif pour son utilisation dans un système selon l'une des revendications précédentes, le détecteur incluant un contrôleur permettant l'activation ou la désactivation de touches de commande de fonctionnalités à partir des données de configuration de sorte que :
∘ lorsqu'une touche est activée, son actionnement par un opérateur induit une modification d'au moins une fonctionnalité du détecteur,
∘ lorsque ladite touche est désactivée, son actionnement par un opérateur n'induit pas de modification de ladite et au moins une fonctionnalité du détecteur
et de sorte que la configuration des touches de commande de fonctionnalités du détecteur soit définie par la configuration de l'ensemble de boutons virtuels représentant les touches sur une interface homme/machine d'une unité de programmation.

Un produit programme d'ordinateur comportant un code programme enregistré sur un support de données lisibles par un ordinateur pour exécuter l'interface homme/machine est également décrit.

### PRESENTATION DES FIGURES

D'autres caractéristiques, buts et avantages de la présente invention ressortiront encore de la description qui suit, laquelle est purement illustrative et non limitative et doit être lue au regard des dessins annexés sur lesquels :
- La figure 1 illustre un exemple de système de configuration d'un détecteur portatif,
- La figure 2 illustre un exemple de détecteur portatif,
- La figure 3 illustre un exemple d'interface interface homme/machine d'une unité de programmation,
- Les figures 4A, 4B illustrent un exemple de fenêtre de paramétrage d'une fonctionnalité commandée par une touche du détecteur portatif.

### DESCRIPTION DETAILLEE

On va maintenant décrire plus en détail un système pour la configuration d'un détecteur portatif en référence aux figures. Dans ces différentes figures, les éléments équivalents portent les mêmes références numériques.

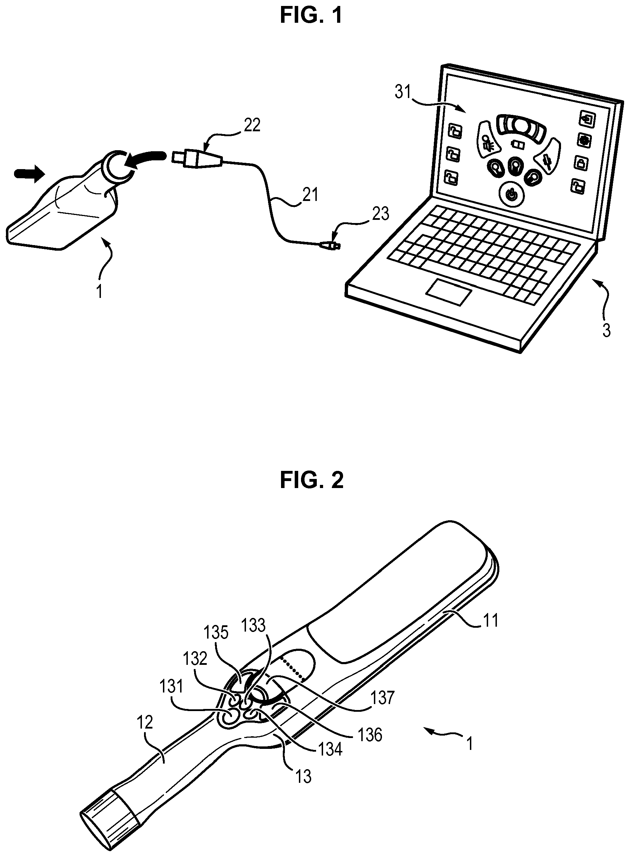

En référence à la figure 1, on a illustré un exemple de système de configuration de touches d'un détecteur portatif 1.

Le système de configuration comprend :
- une unité de programmation 3 du détecteur 1,
- une liaison de communication 2 entre l'unité de programmation 3 et le détecteur 1, et
- un contrôleur localisé dans le détecteur portatif 1.

Ce système de configuration permet à un utilisateur de configurer un détecteur portatif utilisé par un opérateur.

### 1. Unité de liaison

L'unité de liaison 2 permet d'échanger des données entre l'unité de programmation et le détecteur 1.

Dans la suite, on considérera uniquement l'échange de données de configuration depuis l'unité de programmation vers le détecteur 1.

Toutefois, il est bien évident que d'autres types de données peuvent être échangés. Notamment des données de perfectionnement du détecteur permettant la mise à jour de nouvelles fonctionnalités dans le détecteur, etc.
Il est également évident pour l'homme du métier que l'échange de données peut se faire depuis le détecteur vers l'unité de programmation.

Dans une variante d'exécution de l'invention, l'unité de liaison est un câble 21 électriquement conducteur incluant des connecteurs 22, 23 à chacune de ses extrémités pour la connexion du câble 21 à l'unité de programmation 3 d'une part, et au détecteur 1 d'autre part. Ces connecteurs 22, 23 peuvent être de type connecteur USB ou connecteur coaxial ou tout autre type de connecteur connu de l'homme du métier.

Dans une autre variante d'exécution de l'invention, l'unité de liaison 2 est de type sans fil, et comporte un transducteur dans l'unité de programmation, et un transducteur dans le détecteur, les transducteurs échangeant des données sous forme de signaux radiofréquences ou infrarouges, etc.

### 2. Détecteur portatif

En référence à la figure 2, on a illustré un exemple de détecteur 1 selon l'invention. Le détecteur comprend une tête 11, un manche 12 et un corps 13 entre la tête 11 et le manche 12.

### 2.1. Tête

La tête 11 du détecteur comporte un transducteur inductif pour la mesure d'une inductance générée. Le transducteur inductif peut être constitué d'un ou plusieurs bobinages bien connus de l'homme de l'art.

Dans un mode de réalisation, le transducteur inductif est formé d'un simple bobinage constituant émetteur et récepteur.

Dans un autre mode de réalisation, le transducteur est formé de deux bobinages formant respectivement, et le cas échéant alternativement, émetteur et récepteur.

Dans tous les cas, les bobinages comprennent de préférence plusieurs boucles en série de sens inversés permettant de neutraliser les effets de parasites externes.

Par ailleurs, le transducteur inductif peut avantageusement comprendre des bobinages décalés entre eux, tant au niveau de l'émission que de la réception, pour limiter l'inductance mutuelle générée par les bobinages du transducteur inductif.

Bien entendu le nombre de bobinages émetteurs et le nombre de bobinages récepteurs n'est pas limité à un ou deux. Par ailleurs, le nombre de bobinages émetteurs n'est pas nécessairement identique au nombre de bobinages récepteurs.

### 2.2. Manche

Le manche 12 est composé d'un tube formant moyen de préhension du détecteur 1. Le tube est creux pour permettre le logement d'une batterie du détecteur. Le tube creux est ouvert à son extrémité opposée à la tête pour permettre l'introduction/le retrait de la batterie (non représentée).

Le manche 12 comprend également un connecteur de type femelle dans le tube creux pour permettre la connexion du détecteur à la liaison de communication.

Enfin, le manche 12 comprend un couvercle amovible à son extrémité libre pour coiffer l'ouverture du tube creux. Le couvercle est fixé au tube creux par vissage, clipsage ou tout autre élément de fixation connu de l'homme du métier. Dans le mode de réalisation illustré à la figure 2, le couvercle comprend une plaque circulaire et une jupe à sa périphérie, la paroi intérieure de la jupe incluant un filetage destiné à coopérer avec un filetage complémentaire disposé sur une portion d'extrémité de la paroi externe du tube creux.

### 2.3. Le corps

Le corps 13 comprend une unité de traitement telle qu'une carte électronique :
- pour détecter la présence de parties métalliques en fonction des signaux inductifs mesurés par le transducteur inductif, et
- envoyer une commande d'alerte à une alarme du détecteur.

Le corps 13 comprend également l'alarme à laquelle la commande d'alerte est envoyée par l'unité de traitement. Cette alarme peut comporter :
- un vibreur pour faire vibrer le détecteur lorsque du métal est détecté, et/ou
- une diode lumineuse pour illuminer tout ou partie du détecteur lorsque du métal est détecté, et/ou
- un baffle pour émettre un son lorsque du métal est détecté.

Le corps 13 comprend de plus des moyens de saisie. Ces moyens de saisie permettent de paramétrer le détecteur, et plus précisément des fonctionnalités du détecteur.

Les moyens de saisie peuvent être un clavier, un écran tactile, ou tout autre type de moyens de saisie connus de l'homme du métier. Dans tous les cas, les moyens de saisie comprennent des touches telles que :
- des pions poussoirs et/ou des interrupteurs lorsque les moyens de saisie sont de type clavier, ou encore
- des icônes graphiques lorsque les moyens de saisie sont de type écran tactile.

Dans le mode de réalisation illustré à la figure 2, les moyens de saisie comprennent sept touches 131-137 :
- une première touche 131 située dans une portion inférieure du clavier permet d'allumer et d'éteindre le détecteur 1,
- des deuxième 132, troisième 133 et quatrième 134 touches situées au-dessus de la première touche 131 permettent de régler la sensibilité de détection entre une sensibilité faible, une sensibilité moyenne et une sensibilité haute de détection,
- des cinquième 135 et sixième 136 touches situées au-dessus des deuxième, troisième et quatrième touches 132-134 permettent d'allumer ou d'éteindre respectivement la fonctionnalité d'alerte sonore associée et la fonctionnalité d'alerte vibratoire,
- une septième touche 137 permet d'allumer ou d'éteindre la fonctionnalité d'alerte lumineuse.

Le corps 13 comprend enfin le contrôleur du système de configuration selon l'invention. Le contrôleur permet de commander les ressources matérielles et logicielles du détecteur 1 en fonction des données de configuration envoyées par l'unité de programmation 3.

Le contrôleur est par exemple un microcontrôleur, un processeur, ou un microprocesseur. De préférence, le contrôleur est couplé à une mémoire du détecteur pour permettre l'enregistrement :
- des données de configuration issues de l'unité de programmation, ainsi que
- des données de configuration initiales enregistrées dans le détecteur portatif lors de sa fabrication.

Dans tous les cas, le contrôleur permet d'autoriser ou non une commande saisie par un opérateur actionnant les touches du clavier en fonction des données de configuration.

Par exemple, si un utilisateur a généré des données de configuration commandant :
- l'allumage permanent de la fonction vibreur, et
- la désactivation de la touche d'allumage ou d'extinction du vibreur,
Alors :
- l'actionnement par un opérateur de la sixième touche 136 n'induira aucune modification de l'état de la fonction vibreur (la fonction vibreur restera donc allumée).
Si par contre l'utilisateur a généré des données de configuration commandant :
- l'activation de la touche d'allumage ou d'extinction du vibreur,
Alors :
- l'actionnement par un opérateur de la sixième touche 136 induira l'allumage ou l'extinction de la fonction vibreur.

### 3. Unité de programmation

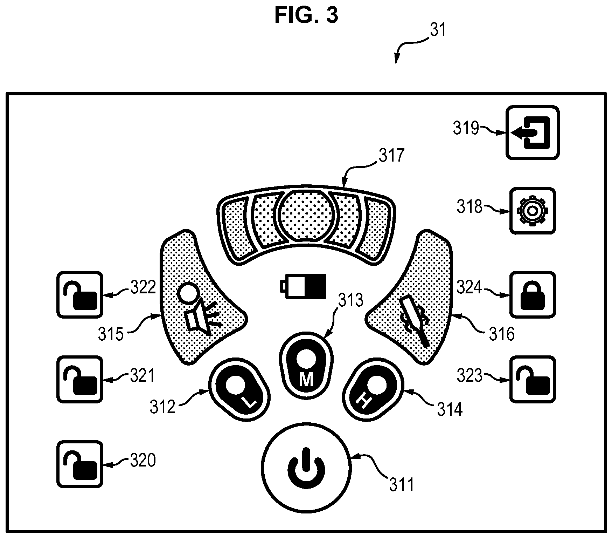

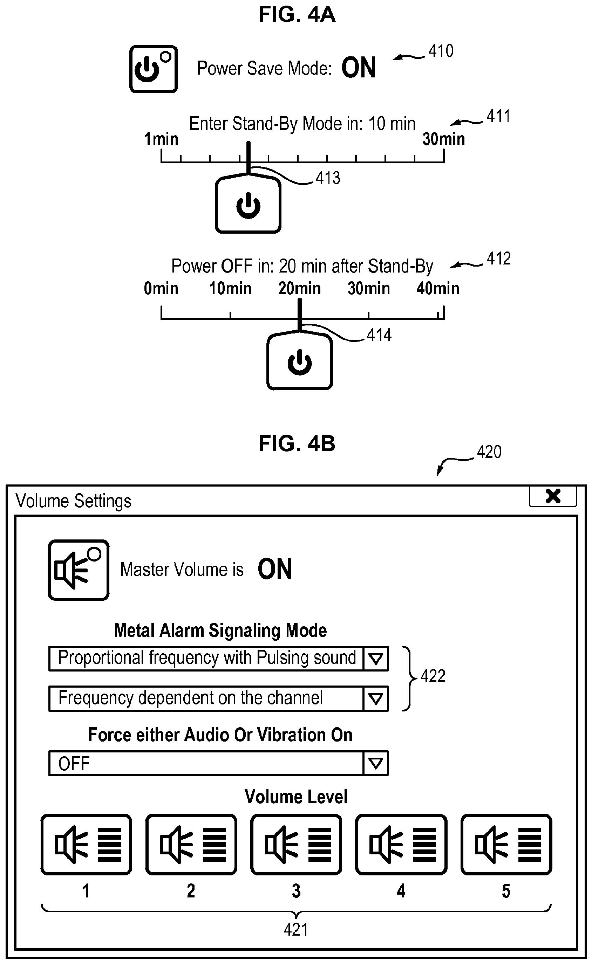

On va maintenant décrire plus en détail un exemple d'unité de programmation en référence aux figures 3 et 4.

L'unité de programmation 3 permet à un utilisateur de générer des données de configuration du détecteur 1, notamment pour activer/désactiver des touches 131-137 du détecteur 1 et/ou paramétrer des fonctionnalités du détecteur 1.

Dans le mode de réalisation illustré à la figure 1, l'unité de programmation 3 est un ordinateur personnel comportant notamment un clavier et une souris, un écran d'affichage, une mémoire et un processeur. Bien entendu, l'unité de programmation peut également être un téléphone portable, une tablette électronique (tel qu'un IPAD®), ou tout autre type de terminal connu de l'homme du métier.

L'unité de programmation 3 comprend une interface homme/machine. Cette interface homme/machine 31 comprend des boutons virtuels 311-319 représentant différentes actions que peut mettre en œuvre l'utilisateur pour configurer le détecteur. La présence d'une interface homme/machine graphique 31 permet de faciliter la sélection par l'utilisateur des différentes fonctionnalités à paramétrer ainsi que des différentes touches à activer/désactiver.
L'interface homme/machine 31 comprend des boutons virtuels 311-317 représentant les touches 131-137 du détecteur 1. Chaque bouton virtuel 311-317 a de préférence la même forme et la même position relative que la touche 131-137 qu'il représente. Ceci permet de fournir une unité de programmation 3 très intuitive et simple d'utilisation puisque l'utilisateur comprend facilement la relation qui existe entre les touches 131-137 du détecteur 1 et les boutons virtuels 311-317 de l'interface homme/machine 31.

L'interface homme/machine 31 comprend également des icônes graphiques 320-324 associées à certains boutons virtuels 312-316 et permettant d'activer ou de désactiver la touche 132-136 correspondante sur le détecteur 1.

Dans le mode de réalisation illustré à la figure 3, cinq icônes graphiques 320-324 sont associées chacune à un bouton virtuel 312-316 respectif.

Ces icônes graphiques 320-324 représentent chacune un cadenas. Ce cadenas est illustré en position ouverte (référence 323 par exemple) sur l'interface homme/machine lorsque la touche correspondante du détecteur doit être activée. Ce cadenas est illustré en position fermée (référence 324 par exemple) sur l'interface homme/machine 31 lorsque la touche correspondante du détecteur 1 doit être désactivée.

L'homme du métier aura bien compris que la fonction d'une icône graphique 320-324 est d'activer ou de désactiver une touche 132-136 du détecteur, indépendamment du fait que la fonctionnalité associée à cette touche soit allumée ou éteinte. Par exemple, la sixième touche 136 du détecteur 1 associée à la commande de la fonction vibreur peut être :
- désactivée alors que la fonction vibreur est allumée ; dans ce cas, la fonction vibreur sera toujours allumée même si un opérateur actionne la sixième touche 136 commandant l'allumage ou l'extinction de la fonction vibreur, ou
- désactivée alors que la fonction vibreur est éteinte ; dans ce cas, la fonction vibreur sera toujours éteinte, même si un opérateur actionne la sixième touche 136 du détecteur, ou enfin
- activée ; dans ce cas, c'est l'actionnement par l'opérateur de la sixième touche 136 commandant la fonction vibreur qui induira l'allumage ou l'extinction de la fonction vibreur.

En référence à la figure 4, on a illustré des exemples de fenêtres de paramétrage. Chacune de ces fenêtres de paramétrage apparaît sur l'écran d'affichage lorsque l'utilisateur sélectionne un bouton virtuel particulier.

Par exemple, si l'utilisateur sélectionne le premier bouton virtuel 311, la fenêtre de paramétrage 410 illustrée à la figure 4A apparaît sur l'écran d'affichage. Cette fenêtre de paramétrage permet à l'utilisateur de définir une durée de mise en veille 411 et une durée de mise hors tension 412 du détecteur 1 lorsque celui-ci n'est pas utilisé. Pour ce faire, la fenêtre de paramétrage 410 comprend deux réglettes 413, 414 permettant à l'utilisateur de définir une durée de mise en veille 411 (par exemple 10 minutes après une absence d'utilisation du détecteur) et une durée de mise hors tension 412 (par exemple 20 minutes après la mise en veille).

Si l'utilisateur sélectionne le cinquième bouton virtuel 315, la fenêtre de paramétrage 420 illustrée à la figure 4B apparaît sur l'écran d'affichage. Cette fenêtre de paramétrage 420 permet à l'utilisateur de définir des paramètres relatifs à l'alarme sonore, et notamment l'intensité du signal sonore émis 421, ainsi que le mode d'émission 422 qui peut être :
- Un mode dit « constant » dans lequel le signal sonore émis est continu et son intensité est constante quelle que soit l'amplitude du signal de détection de métal,
- Un mode dit « progressif » dans lequel la fréquence d'émission du signal sonore est fonction de l'amplitude du signal de détection de métal.

Bien entendu, d'autres fenêtres de paramétrage peuvent apparaître lors de la sélection d'autres boutons virtuels par l'utilisateur, ces fenêtres permettant de paramétrer par exemple :
- les niveaux de sensibilité bas, moyen et fort associés aux deuxième 132, troisième 133 et quatrième 134 touches du détecteur 1, ou encore
- l'intensité du signal vibratoire émis par le vibreur ou encore son mode de vibration (continu, ou fréquentiel avec une fréquence de vibration proportionnelle à l'amplitude du signal de détection de métal),
- l'intensité du signal lumineux émis par la ou les diodes électroluminescentes ou encore leur mode d'émission (à une seule couleur, ou à plusieurs couleurs, la couleur du signal lumineux variant en fonction de l'amplitude du signal de détection de métal), etc.

### Principe de fonctionnement

On va maintenant décrire plus en détail le principe de fonctionnement du système de configuration selon l'invention.

L'utilisateur connecte le détecteur portatif à l'unité de programmation en utilisant le lien de communication :
- L'utilisateur retire le couvercle du détecteur et enlève la batterie puis il raccorde le lien de communication au détecteur,
- L'utilisateur raccorde l'autre extrémité du lien à l'unité de programmation.

L'utilisateur configure ensuite le détecteur.

L'utilisateur choisit tout d'abord les fonctionnalités du détecteur qu'il souhaite activer, et celles qu'il souhaite désactiver. L'actionnement d'un bouton virtuel correspondant à l'une des touches du détecteur permet d'activer ou de désactiver la fonctionnalité associée audit bouton. Lorsque la fonctionnalité associée à un bouton est activée, le bouton virtuel est représenté en couleur sur l'interface homme/machine. Lorsque la fonctionnalité associée à un bouton est désactivée, le bouton virtuel est représenté en niveaux de gris sur l'interface homme/machine. L'utilisateur choisit ensuite d'activer ou de désactiver des touches du détecteur. L'actionnement d'une icône graphique associée à un bouton virtuel donné permet d'activer ou de désactiver la touche correspondante du détecteur. Lorsque le cadenas illustré sur l'icône graphique est ouvert, la touche correspondante du détecteur est activée. Lorsque le cadenas illustré sur l'icône graphique est fermé, la touche correspondante du détecteur est désactivée.

L'utilisateur paramètre ensuite les fonctionnalités du détecteur. En sélectionnant certains des boutons virtuels, des fenêtres de paramétrage s'affichent sur l'interface homme/machine. L'utilisateur sélectionne alors les paramètres pour chacune des fonctionnalités concernées.

Une fois l'ensemble de la configuration effectuée, l'utilisateur active un bouton virtuel permettant la génération d'un code machine avec les données de configurations renseignées par l'utilisateur sur l'interface homme/machine. Ce code machine est ensuite envoyé au détecteur par l'intermédiaire du lien de connexion. Le code machine est enregistré dans une mémoire du détecteur. Ce code machine correspond à un programme du contrôleur.

Avantageusement, l'interface homme/machine peut comprendre un (ou plusieurs) bouton(s) virtuel(s) 318 permettant d'enregistrer le code machine ou les choix effectués par l'utilisateur pour configurer un détecteur dans une mémoire de l'unité de programmation 3. Ceci permet de réutiliser le code machine (ou les choix effectués par l'utilisateur) pour configurer d'autres détecteurs sans obliger l'utilisateur à réitérer ses choix pour chaque nouveau détecteur d'une série de détecteurs qu'il souhaite configurer de façon identique.

Ainsi, le système de configuration selon l'invention permet d'activer ou de désactiver une ou plusieurs touches du détecteur. Il permet également de paramétrer les fonctionnalités du détecteur en fonction des applications visées.

Le lecteur aura compris que de nombreuses modifications peuvent être apportées au système décrit ci-dessus sans sortir matériellement des enseignements du présent document.

Par exemple, le détecteur pourrait être non portatif ou concerner la détection d'autres types de matériau que le métal.

Par ailleurs, le logiciel de programmation mis en œuvre dans l'unité de programmation pourrait être dans le détecteur (utilisé dans ce cas en tant que serveur Web). Dans ce dernier cas, l'opérateur devrait utiliser un terminal de navigation (par exemple, l'Explorateur Windows) pour connecter le détecteur et le configurer (i.e. activation/désactivation de touches et paramétrage des fonctionnalités).

C'est pourquoi de telles modifications sont comprises dans la portée des revendications qui suivent.

### Bibliographie.

US 2009/015372 décrit un processus de paramétrage de fonctionnement d'un outil, avec code d'accès. Il propose en particulier des moyens permettant d'interrompre l'alimentation de l'outil après un temps de fonctionnement ou à heures fixes, et de n'autoriser la remise en service qu'après saisie d'un code d'accès, pour protéger l'outil contre les vols. US 2009/015372 ne se préoccupe aucument de configurer les touches d'un appareil.

US 2009/259321 décrit un système de commande à distance d'un appareillage électronique grâce à un moyen définissant une interface virtuelle distante. US 2009/259321 ne se préoccupe aucument de configurer les touches de l'appareillage électronique.

US 2013/113648 décrit un détecteur associé à un dispositif d'affichage qui permet de visualiser le résultat de la détection, par exemple l'emplacement d'un objet détecté.

## Revendications

1. Système pour la configuration d'un détecteur (1), tel qu'un détecteur de métal, incluant des touches (131, 137) de commande de fonctionnalités du détecteur (1), comprenant un tel détecteur **caractérisé en ce que** le système comprend en outre:
- une unité de programmation (3) distante du détecteur (1) et comportant une interface homme/machine (31) permettant de définir des données de configuration du détecteur (1), laquelle interface homme/machine (31) comprend des boutons virtuels (311-317) représentant les touches (131-137) chaque touche (131-137) étant associée à un bouton virtuel correspondant (311-317) sur l'interface homme/machine (31), et des icônes graphiques associées aux boutons virtuels, chaque bouton virtuel étant représenté par une icône graphique,
- une liaison de communication (2) entre l'unité de programmation (3) et le détecteur (1), la liaison de communication (2) permettant le transfert de données de configuration depuis l'unité de programmation (3) vers le détecteur (1),
- un contrôleur dans le détecteur (1), le contrôleur permettant l'activation ou la désactivation des touches de commande de fonctionnalités du détecteur à partir des données de configuration de sorte que :
∘ lorsque ladite touche (131-137) est activée, son actionnement par un opérateur induit une modification d'au moins une fonctionnalité du détecteur,
∘ lorsque ladite touche (131-137) est désactivée, son actionnement par un opérateur n'induit pas de modification de ladite au moins une fonctionnalité du détecteur
et de sorte que la configuration de l'ensemble des boutons virtuels (311-317) représentant les touches (131-137) sur l'interface homme/machine (314) permet de définir la configuration des touches correspondantes (131-137) de commande de fonctionnalités du détecteur.

2. Système selon la revendication précédente, dans lequel les positions relatives des boutons virtuels (311-317) les uns par rapport aux autres sont identiques aux positions relatives des touches (131-137) les unes par rapport aux autres.

3. Système selon l'une quelconque des revendications 1 ou 2, dans lequel la forme de chaque bouton virtuel (311-317) de l'interface homme/machine (31) est identique à la forme de la touche (131-137) du détecteur qui lui est associé.

4. Système selon l'une quelconque des revendications 1 à 3, dans lequel l'interface homme/machine (31) comprend au moins une icône graphique (320-324) d'activation/de désactivation d'au moins une touche (131-137), l'actionnement de l'icône graphique (320-324) permettant la génération de données de configuration pour l'activation/la désactivation de ladite touche (131-137) sélectionnée.

5. Système selon l'une quelconque des revendications 1 à 4, dans lequel l'interface homme/machine (31) comprend au moins une fenêtre de paramétrage (410, 420) d'au moins une touche (131-137) sélectionnée en actionnant son bouton virtuel (311-317) associé, la fenêtre de paramétrage (410, 420) permettant la génération de données de configuration pour le paramétrage de la fonctionnalité commandée par ladite touche sélectionnée (131-137).

6. Système selon l'une quelconque des revendications précédentes, dans lequel l'interface homme/machine (31) comprend en outre au moins un bouton virtuel (318) permettant le stockage, dans une mémoire de l'unité de programmation (3), de données de configurations générées pour un détecteur (1), et leur réutilisation ultérieure pour la configuration d'un autre détecteur (1).

7. Système selon l'une quelconque des revendications précédentes, dans lequel la liaison de communication (2) comprend un câble coaxial (21) et des connecteurs (22, 23) tels que des connecteurs de type Bus universel en série, les connecteurs (22, 23) permettant la connexion de la liaison de communication (2) à l'unité de programmation (3) d'une part et au détecteur (1) d'autre part.

8. Système selon l'une quelconque des revendications précédentes, dans lequel le détecteur (1) comprend un manche (12) incluant :
- un logement ouvert à son extrémité, le logement étant adapté pour recevoir une batterie du détecteur (1), et
- un couvercle pour coiffer l'extrémité ouverte du logement,
le logement incluant en outre une prise de raccordement telle qu'une prise de raccordement de type Bus universel en série, pour permettre la connexion du détecteur à la liaison de communication.

9. Détecteur (1) pour son utilisation dans un système selon l'une des revendications précédentes, le détecteur (1) incluant un contrôleur permettant l'activation ou la désactivation de touches de commande de fonctionnalités (131-137) à partir des données de configuration de sorte que :
∘ lorsque une touche (131-137) est activée, son actionnement par un opérateur induit une modification d'au moins une fonctionnalité du détecteur,
∘ lorsque ladite touche (131-137) est désactivée, son actionnement par un opérateur n'induit pas de modification de ladite et au moins une fonctionnalité du détecteur
et de sorte que la configuration des touches de commande de fonctionnalités (131 - 137) du détecteur soit définie par la configuration de l'ensemble de boutons virtuels (311-317) représentant les touches sur une interface homme/machine (31) d'une unité de programmation (3).

## Patentansprüche

1. System zur Konfiguration eines Detektors (1) wie ein Metalldetektor, Tasten (131, 137) zur Steuerung von Funktionen des Detektors (1) einschließend, umfassend einen derartigen Detektor, **dadurch gekennzeichnet, dass** das System ferner umfasst:
- eine entfernte Programmiereinheit (3) des Detektors (1) und umfassend eine Mensch-Maschine-Schnittstelle (31), die erlaubt, Konfigurationsdaten des Detektors (1) zu definieren, wobei die Mensch-Maschine-Schnittstelle (31) virtuelle Knöpfe (311-317) umfasst, die die Tasten (131-137) darstellen, wobei jede Taste (131-137) einem entsprechenden virtuellen Knopf (311-317) auf der Mensch-Maschine-Schnittstelle (31) zugeordnet ist, und grafische Icons, die den virtuellen Knöpfen zugeordnet sind, wobei jeder virtuelle Knopf von einem grafischen Icon dargestellt wird,
- eine Kommunikationsverbindung (2) zwischen der Programmiereinheit (3) und dem Detektor (1), wobei die Kommunikationsverbindung (2) die Übertragung von Konfigurationsdaten von der Programmiereinheit (3) zum Detektor (1) erlaubt,
- einen Controller in dem Detektor (1), wobei der Controller die Aktivierung oder die Deaktivierung der Tasten zur Steuerung von Funktionen des Detektors auf der Basis von Konfigurationsdaten derart erlaubt, dass:
∘ wenn die Taste (131-137) aktiviert ist, ihre Betätigung durch einen Bediener eine Änderung von mindestens einer Funktion des Detektors induziert,
∘ wenn die Taste (131-137) deaktiviert ist, ihre Betätigung durch einen Bediener keine Änderung der mindestens einen Funktion des Detektors induziert,
und derart, dass die Konfiguration der Einheit der virtuellen Knöpfe (311-317), die die Tasten (131-137) auf der Mensch-Maschine-Schnittstelle (314) darstellen, erlaubt, die Konfiguration der entsprechenden Tasten (131-137) zur Steuerung von Funktionen des Detektors zu definieren.

2. System nach vorangehendem Anspruch, wobei die relativen Positionen der virtuellen Knöpfe (311-317) zueinander mit den relativen Positionen der Tasten (131-137) zueinander identisch sind.

3. System nach einem der Ansprüche 1 oder 2, wobei die Form jedes virtuellen Knopfs (311-317) der Mensch-Maschine-Schnittstelle (31) mit der Form der Taste (131-137) des Detektors identisch ist, die ihm zugeordnet ist.

4. System nach einem der Ansprüche 1 bis 3, wobei die Mensch-Maschine-Schnittstelle (31) mindestens ein grafisches Aktivierungs-/Deaktivierungsicon (320-324) mindestens einer Taste (131-137) umfasst, wobei die Betätigung des grafischen Icons (320-324) die Generierung von Konfigurationsdaten für die Aktivierung/die Deaktivierung der ausgewählten Taste (131-137) erlaubt.

5. System nach einem der Ansprüche 1 bis 4, wobei die Mensch-Maschine-Schnittstelle (31) mindestens ein Einstellungsfenster (410, 420) mindestens einer ausgewählten Taste (131-137) durch Betätigung ihres zugeordneten virtuellen Knopfs (311-317) umfasst, wobei das Einstellungsfenster (410, 420) die Generierung von Konfigurationsdaten für die Einstellung der von der ausgewählten Taste (131-137) gesteuerten Funktion erlaubt.

6. System nach einem der vorangehenden Ansprüche, wobei die Mensch-Maschine-Schnittstelle (31) ferner mindestens einen virtuellen Knopf (318) umfasst, der das Speichern, in einem Speicher der Programmiereinheit (3), von für einen Detektor (1) generierten Konfigurationsdaten und ihre spätere Wiederverwendung für die Konfiguration eines anderen Detektors (1) erlaubt.

7. System nach einem der vorangehenden Ansprüche, wobei die Kommunikationsverbindung (2) ein Koaxialkabel (21) und Verbinder (22, 23) wie Verbinder vom Typ Universalbus in Reihe umfasst, wobei die Verbinder (22, 23) die Verbindung der Kommunikationsverbindung (2) mit der Programmiereinheit (3) zum einen und mit dem Detektor (1) zum anderen erlauben.

8. System nach einem der vorangehenden Ansprüche, wobei der Detektor (1) einen Griff (12) umfasst, einschließend:
- eine an seinem Ende offene Aufnahme, wobei die Aufnahme zum Empfang einer Batterie des Detektors (1) geeignet ist, und
- einen Deckel, um das offene Ende der Aufnahme abzudecken,
wobei die Aufnahme ferner eine Anschlusssteckdose wie eine Anschlusssteckdose vom Typ Universalbus in Reihe einschließt, um die Verbindung des Detektors mit der Kommunikationsverbindung zu erlauben.

9. Detektor (1) für seine Verwendung in einem System nach einem der vorangehenden Ansprüche, wobei der Detektor (1) einen Controller einschließt, der die Aktivierung oder die Deaktivierung von Tasten zur Steuerung von Funktionen (131-137) auf der Basis von Konfigurationsdaten derart erlaubt, dass:
∘ wenn eine Taste (131-137) aktiviert ist, ihre Betätigung durch einen Bediener eine Änderung von mindestens einer Funktion des Detektors induziert,
∘ wenn die Taste (131-137) deaktiviert ist, ihre Betätigung durch einen Bediener keine Änderung der mindestens einen Funktion des Detektors induziert,
und derart, dass die Konfiguration der Tasten zur Steuerung von Funktionen (131-137) des Detektors durch die Konfiguration der Einheit virtueller Knöpfe (311-317) definiert ist, die die Tasten auf einer Mensch-Maschine-Schnittstelle (31) einer Programmiereinheit (3) darstellen.

## Claims

1. A system for configuring a detector (1), such as a metal detector, including keys (131, 137) for controlling the functionalities of the detector (1), comprising such detector **characterized in that** the system further comprises:
- a remote programming unit (3) of the detector (1) and including a human/machine interface (31) for defining configuration data of the detector (1), which human/machine interface (31) comprises virtual buttons (311-317) representing the keys (131, 137), each key (131, 137) being associated with a corresponding virtual button (311-317) on the human/machine interface (31), and graphic icons associated with the virtual buttons, each virtual button being represented by a graphic icon,
- a communication link (2) between the programming unit (3) and the detector (1), the communication link (2) allowing the transfer of configuration data from the programming (3) to the detector (1),
- a controller in the detector (1), the controller allowing the activation or deactivation of the keys controlling the functionalities of the detector from the configuration data such that:
∘ when said key (131-137) is activated, its actuation by an operator incurs a modification of at least one functionality of the detector,
∘ when said key (131-137) is deactivated, its actuation by an operator does not incur a modification of said at least one functionality of the detector.
and such that the configuration of the set of virtual buttons (311-317) representing the keys (131, 137) on the human/machine interface (314) makes it possible to define the configuration of the corresponding keys (131, 137) controlling the functionalities of the detector.

2. The system according to the preceding claim, wherein the relative positions of the virtual buttons (311-317) in relation to one another are identical to the relative positions (131-137) in relation to one another.

3. The system according to any one of claims 1 or 2, wherein the shape of each virtual button (311-317) of the human/machine interface (31) is identical to the shape of the key (131-137) of the detector that is associated with it.

4. The system according to any one of claims 1 to 3, wherein the human/machine interface (31) comprises at least one graphic icon (320-324) for activating/deactivating at least one key (131-137), the actuation of the graphic icon (320-324) allowing the generation of configuration data for activating/deactivating said selected key (131-137).

5. The system according to any one of claims 1 to 4, wherein the human/machine interface (31) comprises at least one window (410, 420) for setting the parameters of at least one key (131-137) selected by actuating its associated virtual button (311-317), the settings window (410, 420) allowing the generation of configuration data for the setting of the functionality controlled by said selected key (131-137).

6. The system according to any one of the preceding claims, wherein the human/machine interface (31) further comprises at least one virtual button (318) allowing the storage, in a memory of the programming unit (3), of configuration data generated for a detector (1), and their subsequent re-use for configuring another detector (1).

7. The system according to any one of the preceding claims, wherein the communication link (2) comprises a coaxial cable (21) and connectors (22, 23) such as connectors of Universal Series Bus type, the connectors (22, 23) allowing the connection of the communication link (2) to the programming unit (3) on the one hand and to the detector (1) on the other.

8. The system according to any one of the preceding claims, wherein the detector (1) comprises a handle (12) including:
- a housing open at its end, the housing being adapted to receive a battery of the detector (1), and
- a cover to cover the open end of the housing,
the housing further including a connection plug such as a connection plug of Universal Series Bus type, to allow the connection of the detector to the communication link.

9. A detector (1) for use in a system according to one of the preceding claims, the detector (1) including a controller allowing the activation or deactivation of functionality control keys (131-137) from configuration data such that:
∘ when a key (131-137) is activated, its actuation by an operator incurs a modification of at least one functionality of the detector,
∘ when said key (131-137) is deactivated, its actuation by an operator does not incur any modification of said and at least one functionality of the detector.
and such that the configuration of the functionality control keys (131-137) of the detector is defined by the configuration of the set of virtual buttons (311-317) representing the keys on a human/machine interface (31) of a programming unit (3).
